# EUROPEAN PATENT APPLICATION

(11) **EP 1 347 449 A1**
(43) Date of publication of application: **24.09.2003**
(21) Application number: 01995013.8
(22) Date of filing: 26.12.2001
(51) Int. Cl.: G11B 7/26, G11B 7/24, B32B 7/06, C09J 7/02

(54) **METHOD OF MANUFACTURING OPTICAL DISK FORMED OF SINGLE DISK, AND FOUR-LAYER ADHERED SHEET BODY AND WOUND BODY OF THE SHEET BODY USED FOR THE METHOD**

(30) Priority: 28.12.2000 JP 2000402268; 15.06.2001 JP 2001182565
(71) Applicant: Kitano Engineering Co., Ltd., Komatsushima-shi, Tokushima-ken 773-0008 (JP)
(72) Inventor: KITANO, Ryoko, Kitano Engineering Co., Ltd., Komatsushima-shi, Tokushima 773-0008 (JP); INOUCHI, Masami, Kitano Engineering Co., Ltd., Komatsushima-shi, Tokushima 773-0008 (JP)
(74) Representative: Goddar, Heinz J., Dr.
(86) International application number: JP0111451
(87) International publication number: WO02054399

(57) **Abstract**

This invention is purported to provide a method for manufacturing an optical disc in a simple and uniformly a protective layer on a single layered disc.

Further, the invention is directed to provide a four layered adhesive sheet member for use therein as well as rolled member thereof.

The optical disc manufacturing method comprises steps of peeling a release paper 1D from a four layered adhesive sheet member 1 which is composed of an elongated release paper 1A, a protective sheet 1B provisionally attached to the elongated release paper, an adhesive layer 1C formed on protective sheet, and a release paper 1D to expose the adhesive layer 1C, and abutting against the surface the single layered disc a three layered adhesive sheet member from which the release paper 1D is peeled off transferring and bonding the protective sheet 1B to the surface of a single layered disc; thereafter peeling off the elongated release paper 1A from the protective sheet 1B bonded to the single layered disc to expose the protective sheet to the upside of the single layered disc.

## Description

### Technical Field

This invention relates to a method for manufacturing an optical disc, and more particularly, to an optical disc such as a digital video recorder (hereinafter referred to DVR) which is adapted so that a pit surface of the single layered disc is protected by a protective sheet.

### Background of Art

Computers, among others, personal computers and the like have recently been remarkably popularized and accordingly storage mediums for use therein, especially the capacity of the optical disc has been highly densified more and more, thereby requiring many types thereof.

As for the optical disc, there are, for example, a digital video disc-random access memory, and a digital video disc-random memory (hereinafter referred to as DVD-RAM, DVD-RW and the like, all of them are manufactured by laminating two discs.

Notwithstanding, outstanding performance, for example, not only greater memory capacity but also high capacity of the optical disc which includes a single layered disc (the so-called DVD) has been required accordingly.

This type of DVR has memory capacity approximately five times as much as the conventional DVD, for example, 22.5 gigabytes.

The optical disc in the form of DVR has been so dimensioned that its thickness is 1.2 mm, external diameter is 120 mm, and the internal diameter of its center hole is 15mm.

Its sectional configuration is such that information applied pit is formed one side of a single layered disc, and that the pit is protected and covered by resin material.

The protective layer is of 0.1 mm and is adapted to read out an information applied to the pit by means of a blue laser of a wave length, for example of 405 nanometer.

Now, for manufacturing the optical disc which is formed with the protective layer by means of this type of the resin material, there is a method which is composed of the steps of applying ultraviolet light curable resin to the pit surface of the single layered disc, thereafter rotating the single layered disc to develop ultraviolet light curable resin all the surface of the single layered disc, and finally irradiating the ultraviolet light thereto and curing the same.

However, this method when used does not necessarily develop the ultraviolet light curable resin the single layered disc as a whole evenly.

In this connection, it is noted that this type of DVR requires extremely uniform protective layer if the aforementioned blue laser is used since the distance to the recording layer is specified as 0.1 mm.

Further more, an adhesive may be outwardly scattered at any rate by centrifugal force to circumferentially stain while get scattered and lost to lower an effective usage rate.

Still more, means or the like for irradiating the ultraviolet light is required so that a large scaled device or means for forming the protective layer, thereby increasing a cost.

In view of the aforementioned, a method for manufacturing DVR is necessitated without requiring a step for developing the adhesive as mentioned hereinbefore.

### (Problem to be solved by the invention)

The present invention is provided to solve the aforementioned problem.

More specifically, it is an object of the present invention to provide a method for manufacturing an optical disc for readily and simply forming a protective layer on the single layered disc.

Further, a further object of the invention is to provide a four layered adhesive sheet member for use as well as a rolled member.

### Disclosure of the invention

### (Means for solving problem)

In view of the aforementioned problems, as a result of concentrated research thereon, such problem has been readily, uniformly, solved more than as expected by employing an adhesive sheet consisting of a four layered adhesive sheet member, thereafter, the invention has completed.

More specifically, it is a first aspect of the invention resides in a method for manufacturing optical disc to allow a protective sheet with an adhesive layer to abut against a single layered adhesive sheet member and then a protective sheet being bonded to the single layered disc.

A second aspect of the invention resides in the method for manufacturing optical disc wherein there is composed of an elongated release paper, a protective sheet temporarily attached to the elongated release paper, an adhesive layer on the protective sheet, a release paper tacked to the adhesive layer, wherein the release paper is allowed to expose the adhesive layer, a three layered adhesive sheet from which the release sheet is released is adapted to abut against the surface of the single layered disc to transport and bond the surface of the single layered disc, and wherein the elongated release paper is released from the protective sheet bonded to the single layered disc to thereby expose the protective sheet on the single layered disc.

A third aspect of the invention resides in the method for manufacturing optical disc wherein the adhesive layer is exposed by releasing the release paper from the four layered adhesive sheet is composed of an elongated release paper, a protective sheet temporarily attached to the elongated release paper, an adhesive layer on the protective sheet, a release paper temporarily adhesive to the adhesive layer, wherein the release paper is released from the four layered adhesive sheet to abut against the surface of the single layered disc to transport and bond the surface of the single layered disc through the adhesive layer, and wherein the elongated release paper is released from the protective sheet bonded to the single layered disc to thereby expose the protective sheet on the single layered disc and thereafter, the single layered disc is pressured by an atmosphere of an air pressure to eliminate air bubble.

A fourth aspect of the invention resides in the method for manufacturing optical disc wherein the adhesive sheet member is so pressed against the single layered disc as to enlarge the area of contact thereof from the center below to outside when the three layered adhesive sheet member abuts against the surface of the single layered disc.

A fifth aspect of the invention resides in the method for manufacturing optical disc wherein the adhesive sheet member is pressed against the single layered disc by a roller when the three layered adhesive sheet member abuts against the surface of the single layered disc.

A sixth aspect of the invention resides in the method for manufacturing optical disc wherein the protective sheet is formed of polycarbonate resin.

A seventh aspect of the invention resides in the method for manufacturing optical disc wherein a release paper is polyethylene terephthalate resin as processed by silicone.

A eighth aspect of the invention resides in the method for manufacturing optical disc wherein an elongated release paper is polyethylene terephthalate resin as processed by silicone.

A ninth aspect of the invention resides in the method for manufacturing optical disc wherein pneumatic pressure is more than 10kg/cm³.

A tenth aspect of the invention resides in the four layered adhesive sheet which is employed when the optical disc is manufactured wherein said four layered adhesive sheet member comprises an elongated release paper, a protective sheet adapted to longitudinally, temporarily adhere to the elongated release paper at regular intervals, an adhesive layer formed on the protective sheet, and a release paper adapted to temporarily adhere to the adhesive layer and wherein an opening bored through the four layered adhesive sheet.

The eleventh feature of the invention resides in four layered adhesive sheet member wherein the protective sheet is formed of polycarbonate resin whereas the adhesive layer of the protective sheet is formed of acrylic adhesive.

The twelfth feature of the invention resides in the roll member formed by winding the four layered adhesive sheet member used for manufacturing the optical disc into a cylinder in a mandrel form which is employed when the optical disc is manufactured wherein said four layered adhesive sheet member comprises an elongated release paper, a protective sheet adapted to longitudinally, temporarily adhere to the elongated release paper at regular intervals, an adhesive layer formed on the protective sheet, and a release paper adapted to temporarily adhere to the an adhesive layer, and wherein an opening bored through the four layered adhesive sheet.

The thirteenth feature of the invention resides in the rolled member wherein the four layered adhesive sheet member is wound around a mandrel cylinder with a center hole through non-adhesive attached sheet.

So long as the invention conforms to the aforementioned objects, the invention may be practiced in combination with more than two defined arrangements selected from the aforementioned aspects 1-13.

If specifications of the four layered adhesive sheet member selected optionally more optional protective thickness.

### (Effect of the Invention)

By use of the four layered adhesive sheet member, uniform protective layer may be formed.

The thickness of the protective layer as the single layered optical may readily changed by only change the thickness of protective sheet 1B out of the adhesive sheets, the protective layer may be formed evenly on the surface of the single layered with neither any air bubbles nor crease. Because of use of the four layered adhesive sheet, more effective optical disc may be possibly obtained.

In other words, as different from lamination when a conventional ultraviolet curable resin, this invention does not necessitate step of developing the adhesive and of irradiating the ultraviolet beam thereby curtailing numbers of manufacturing steps or processes.

### Brief Description of the Drawings

Fig. 1 is a representation showing the four layered adhesive sheet member; and FIG. 1(A) is a side view thereof and FIG.1(B) is a front view thereof;
Fig.2 is a schematic view of each stage of production of the optical disc according to the present invention;
Fig.3 is a schematic view showing the manner in which the disc is pressurized by use of a flexible pressure member;
Fig.4 is a schematic view showing the manner in which the disc is pressurized by use of a roller type of pressure member;
FIG.5 is a schematic view of an optical disc of a single layered disc in accordance with the present invention;
Fig. 6 is a plan view of a four layered adhesive sheet member used by a method for manufacturing the optical disc;
Fig. 7 is a side view of each of the four layered adhesive sheet member fed out from the mandrel cylinder; and
Fig. 8 is a perspective view of a roll member wound with the four layered adhesive sheet member.

### Best Mode for Carrying out of the Invention

### (Mode for Carrying out of the Invention)

Now, a method of manufacturing an optical disc of a single layered disc by use of a four layered adhesive sheet member according to the invention will be described hereinafter.

Initially, the adhesive sheet member S will be described.

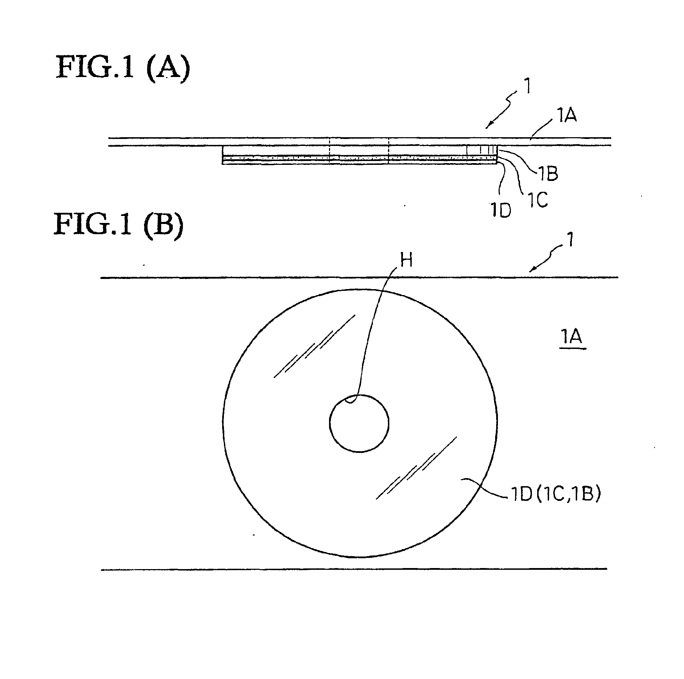

Fig.1 shows a representation of the four adhesive layered sheet member.

Fig. 1(A) is a side view thereof, and FIG.1 (B) is a plan view thereof.

Herein, the four adhesive sheet member, the single layered disc, and the optical disc those of which as a matter of convenience and for facilitating the understanding are shown in a manner of exaggeration of their thickness (for this reason, it is not necessarily accurate with respect to relation between length and breadth of magnification).

A four layered adhesive sheet member 1 used herein is a multilayered adhesive sheet member which is composed of an elongated release paper 1A, a specifically speaking, the four layered adhesive sheet member 1 comprises the elongated release paper 1A, the protective sheet 1B [the elongated release paper 1A is temporarily adheres to the protective sheet 1B by an adhesive layer, (for example, acrylic pressure sensitive adhesive layer) not shown, in thickness on the order of 2∼3µm], an adhesive layer 1C, and a release paper 1D allowed to temporarily adhere to the adhesive layer, the elongated release paper 1A being integrally formed with the protective sheet 1B, the adhesive layer 1C, the release paper 1D superposed thereon and bonded thereto at a distance.

Those of the protective sheet 1B, the adhesive layer 1C, and the release paper 1D are in a form of a long playing record sheet and many of them temporarily bonded longitudinally at a certain distance to the surface of the elongated release paper 1A is made of an elongated synthetic resin tape and served as a base of the four layered adhesive sheet member 1, which is so called "carrier".

The elongated release paper 1A includes the protective sheet 1B temporarily attached.

The protective sheet 1B as will be later described, is so arranged to transfer from the elongated release paper 1A and then adhere to the single layered disc 2 to protect a bit surface thereof.

The elongated release paper 1A and the protective sheet 1b may be both temporarily attached by acrylic adhesive layer.

The adhesive layer 1C is provided with the surface to interpose between the single layered disc 2 and the protective sheet 1B to bond both of them.

The release paper 1D is temporarily attached to the adhesive layer 1C to cover the surface therewith thus preventing the adhesive layer from staining the latter.

The four layered adhesive sheet member 1 is formed in its center with ahole H bored through the elongated release paper 1A, the protective sheet 1B, the adhesive layer 1C, and the release paper 1D simultaneously to correspond to the hole in the single layered disc 2.

In this connection, it is noted that the hole H is used when the four layered adhesive sheet member 1 is positioned with respect to a holding table.

Typically, preferably the four layered adhesive sheet member 1 may employ, for example, a thin paper material such as polyethylene or the like and be, for example, up to 50 µm.

As for the protective sheet 1B, a thin paper material such as polycarbonate resin which is excellent in hardness and strength to sufficiently protect a pit surface of the single layered disc is employed in thickness, for example, 70 µm.

The adhesive layers 1C such as, for example, mainly, pressure sensitive adhesives, for example, rubber adhesive, acrylic adhesive, silicone adhesive, vinyl adhesive and the like are employed, each of them is of thickness, for example, 30 µ m.

PET(polyethylene terephthalate) and the like is employed as the release paper 1D and is dimensioned as thickness of 50 µm.

Incidentally, a layer of thickness of each of the elongated release paper 1A, the protective sheet 1B, the adhesive layer 1C, especially, these two protective sheet 1B and the adhesive sheet 1C may determine or select optimum thickness according to types of the optical discs as designed.

Stated otherwise, it is advisable to select optimum specification of the four layered adhesive sheet member.

Next, the method for manufacturing the optical disc D by laminating the four layered adhesive sheet member 1 to the single layered disc 2 will be described according to the respective steps.

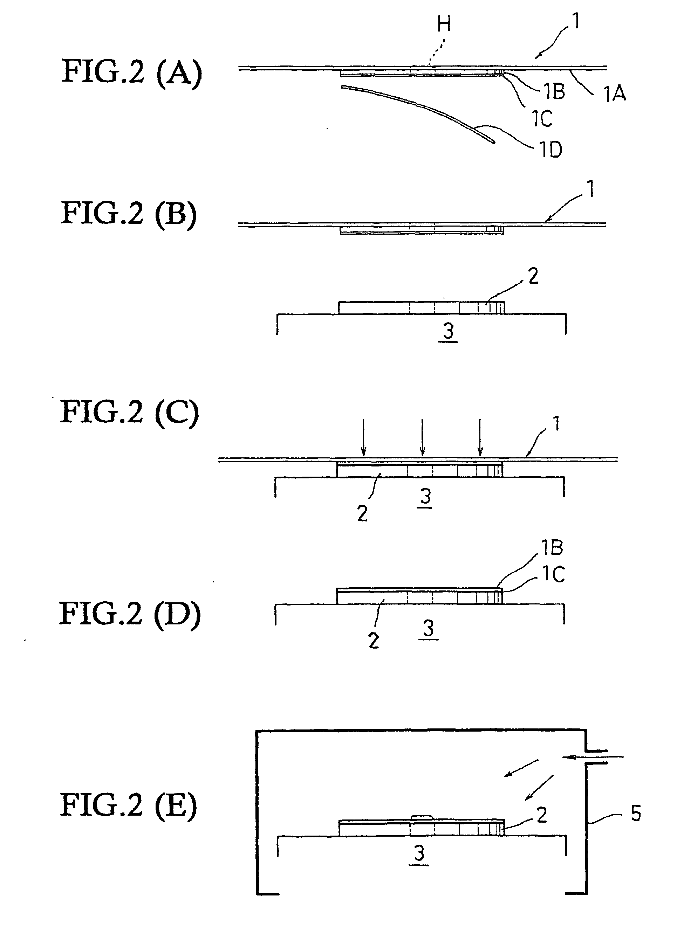

Figs.2(A) ∼Figs.2(E) shows successively the steps for manufacturing the optical disc according to the invention.
1. Initially, provision is made for the single layered disc 2 with a pit surface to which the information is applied, and the aforementioned four layered adhesive sheet member 1.
2. Peeling the release paper 1D from the four layered adhesive layer to leave the three-layered adhesive sheet member, thereby exposing the adhesive thereunder layer 1C [see Fig.2(A)].
3. The three layered adhesive sheet member is located upwardly of the single layered disc 2 carried on the holding table 3 [see Fig.2(B)]. In this case, the hole H may be available but not detailed.
4. Hold-down member is pressurized from the upper of the three layered adhesive sheet member to abut the latter against the surface of the single layered disc 2 [see Fig.2 (C)].

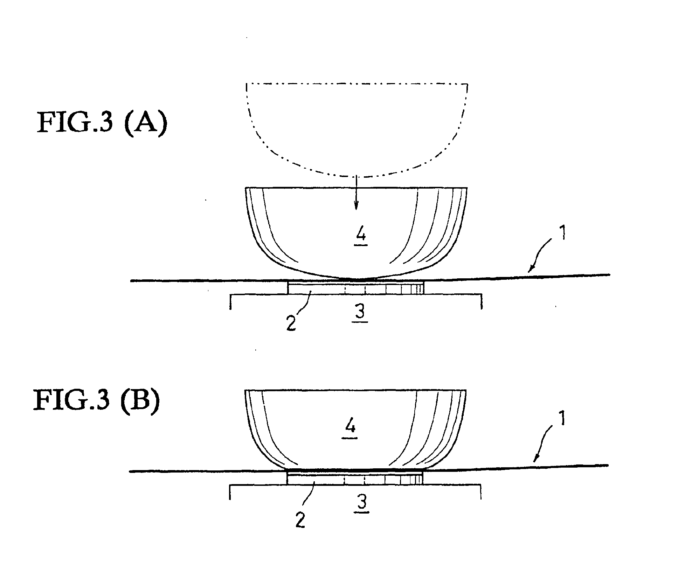

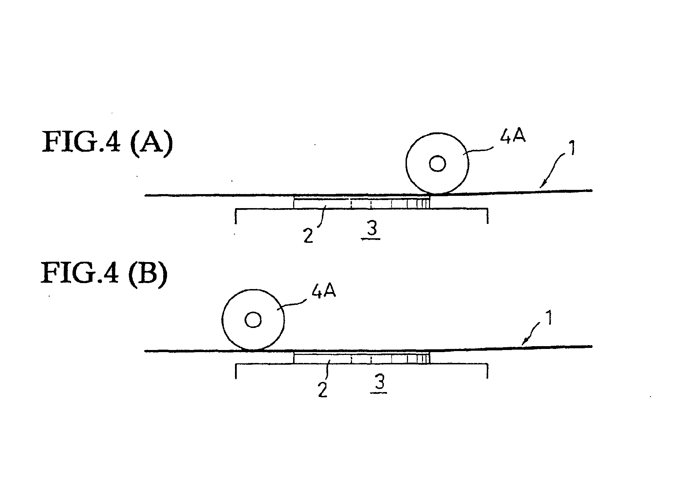

   Figs. 3 and 4 illustrated a manner in which the adhesive sheet member is depressed by the hold down member.
   Fig. 3 shows a manner in which the single layered disc is held down by a flexible hold down member.
   Fig. 4 shows a manner in which the single layered disc is pressed down by a roller type of a hold down member.
   The former is adapted so that semi hemispheric shaped flexible hold down member 4 is contact bonded to the single layered disc in such a manner that the adhesive sheet member is enlarged from its center side toward its outer side [see Fig. 3(A)→Fig. 3(B)].
   In this instance, air bubbles and the like disposed between the three layered adhesive sheet member and the single layered disc 2 are exhausted from the circumference to the open air.
   The latter is arranged so that the three layered adhesive sheet member is successively contact bonded by the roller 4A from one end to the other end [see Fig. 4 (A)→Fig.4(B)].
   In the aforementioned manner, according to the aforementioned press action, the adhesive layer 1C of the three layered adhesive sheet member is transferred and attached to the pit surface of the single layered disc 2.
5. Next, the elongated release paper 1A is peeled from the three layered adhesive sheet member to obtain the two layered adhesive sheet member.
   As a result, the protective sheet 1B is rendered to adhesive bond to the single layered disc 2 upwardly thereof through the adhesive layer 1C, thus forming the protective layer [see Fig. 2(D)].
6. Now, the single layered disc 2 with the protective layer as formed is placed in an atmosphere under a certain air pressure and subjected to pressure application [see Fig.2(E)].

In this case, as shown, preferably, the single layered disc 2 is positioned within a pressure container 5 while placing on the holding table 3 and being subjected to the air pressure.

The air pressure serves to exhaust the air contained in the adhesive layer.

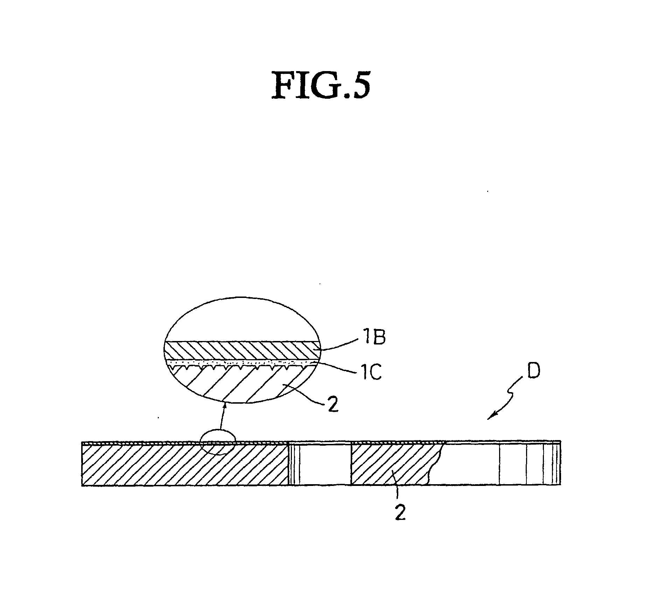

The applied pressure in this instance, preferably, more than 10 kg/cm² [980665(Pa)]may be employed in view of efficiency of exhaust of the air bubbles(see Fig.5).

As for the optical disc D, the protective layer formed on the surface (one side) is extremely uniformalized since the protective layer is in a condition in which the protective sheet 1B is held applied to the surface of the single layered disc 2 by the adhesive so that uniformity may be guaranteed so long as the protective sheet 1B to be used is uniform.

Finally, the actual condition in which the adhesive sheet member according to the present invention will be described hereinafter.

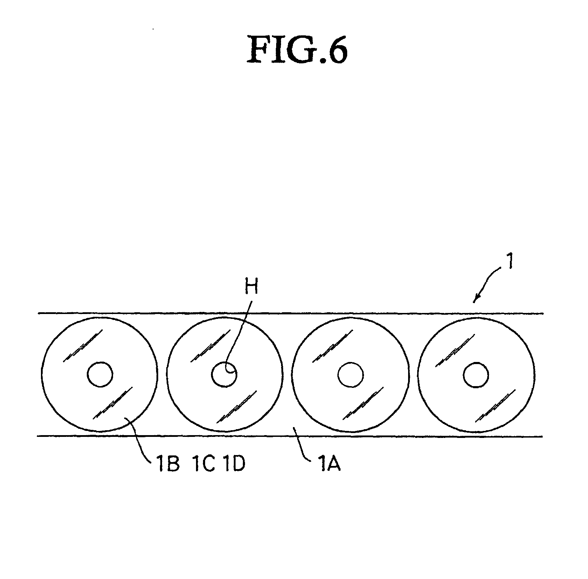

Fig.6 a plan view of the four layered adhesive sheet member used in the method for manufacturing the optical disc.

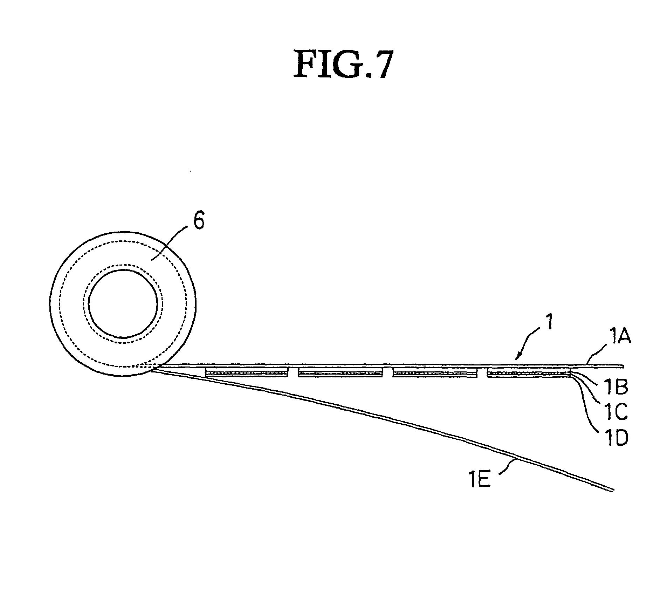

Fig. 7 is a side view showing the four layered adhesive sheet which is fed out from the mandrel cylinder.

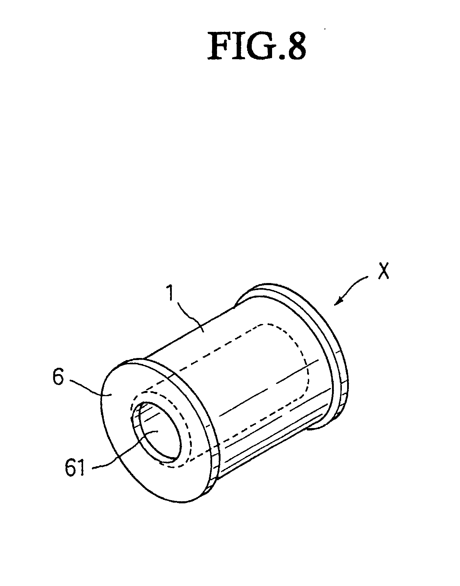

Fig. 8 is a perspective view showing the rolled member around which the four layered adhesive sheet member is wound.

The four layered adhesive sheet member 1 comprises the elongated release paper 1A, the protective sheet 1B, the adhesive layer 1C formed on the protective sheet, and the release paper 1D temporarily attached to the adhesive layer.

It is, however, noted that these are in the form of the rolled member X which are convenient for feeding out them when the protective sheet is transferred and bonded to the surface of the single layered disc.

The rolled member X is so fabricated as to wind the release paper around collared mandrel cylinder 61 by non-adhesive attached paper 1E in thickness on the order of 60 µm, for example, (normally so called "interleaving paper") so as prevent inadvertently peeled release paper from sticking to the back side of the elongated release paper 1A.

In this manner, the elongated four layered adhesive sheet member 1 is fabricated to form the rolled member X to feed out the member in a smooth manner.

Occasionally speaking, a support shaft as a part of the optical disc manufacturing apparatus is inserted into a mandrel hole 61 of the collared mandrel cylinder 6 to rotatably support the rolled member X assuming a posture of standing by ready to feed out.

Although the invention has been described in detailed, it is not limited to only the embodiment, it is needless to say that various modification may be made without departing from the spirit and scope of the invention.

For example, it is not necessarily to take the step as stated in Item 6, in which the single layered disc is placed in an atmosphere of air pressure to press it.

In other words, this step if applied, high quality of the optical disc D may be manufactured.

### Industrial Applicability

This invention relates to a method for manufacturing an optical disc composed of a single layered disc.

This may be applicable to an optical disc (Digital Video Recorder) whose pit surface is protected by a protective sheet.

This invention may be applicable to any memory disc without departing from its principal and adaptable to any field so long as the same effect may be expected.

## Claims

1. A method for manufacturing optical disc **characterized by** allowing a protective sheet (1B) with an adhesive layer (1C) to abut against a single layered disc (2) and in that a protective sheet (1B) being bonded to the single layered disc (2) by an adhesive layer(1C).

2. A method for manufacturing optical disc **characterized in that** a four layered adhesive sheet member(1) is composed of an elongated release paper(1A), a protective sheet(1B) temporarily attached to the elongated release paper, an adhesive layer formed on the protective sheet, a release paper temporarily attached to the adhesive layer, and **in that** the release paper is peeled from the four layered adhesive sheet member to expose the adhesive(1C), a three layered adhesive sheet from which the release sheet is released is adapted to abut against the surface of the single layered disc to transport and bond the surface of the single layered disc, and **in that** the elongated release paper is released from the protective sheet bonded to the single layered disc to thereby expose the protective sheet on the single layered disc.

3. A method for manufacturing optical disc **characterized in that** the adhesive layer (1C) is exposed by releasing the release paper from the four layered adhesive sheet member(1) which is composed of an elongated release paper(1A), a protective sheet (1B) temporarily attached to the elongated release paper, an adhesive layer on the protective sheet, a release paper temporarily adhesive to the adhesive layer, and **in that** the release paper is released from the four layered adhesive sheet to abut against the surface of the single layered disc to transport and bond the surface of the single layered disc through the adhesive layer, and wherein the elongated release paper is released from the protective sheet bonded to the single layered disc to thereby expose the protective sheet on the single layered disc and thereafter, the single layered disc(2) is pressured by an atmosphere of an air pressure to eliminate air bubbles.

4. The method for manufacturing optical disc as described in Claim 3 **characterized in that** the three layered adhesive sheet member(S) so abuts against the single layered disc as to enlarge the contact portion from the center (side) toward outside when the three layered adhesive sheet member(S) abuts against the surface of the single layered disc(2).

5. The method for manufacturing optical disc as described in Claim 3 **characterized in that** the adhesive sheet member(S) pressed against the single layered disc(2) by a roller when the three layered adhesive sheet member abuts against the surface of the single layered disc(2).

6. The method for manufacturing optical disc as described in Claim 3 **characterized in that** the protective sheet (1B) is formed of polycarbonate resin.

7. The method for manufacturing optical disc as described in Claim 3 **characterized in that** a release paper(1D) is polyethtylene terephthalate resin as processed by silicone.

8. The method for manufacturing optical disc as described in Claim 3 **characterized in that** an elongated release paper(1A) is polyethylene terephthalate resin as processed by silicone.

9. The method for manufacturing optical disc as described in Claim 3 **characterized in that** pneumatic pressure as pressed is more than 10kg/cm³.

10. A four layered adhesive sheet member (1) which is employed when the optical disc is manufactured **characterized in that** said four layered adhesive sheet member comprises an elongated release paper(1A), a protective sheet adapted to longitudinally, temporarily adhere to the elongated release paper at regular intervals, an adhesive layer formed on the protective sheet, and a release paper adapted to temporarily adhere to the adhesive layer, and that an opening is bored through the four layered adhesive sheet.

11. The four layered adhesive sheet member as described in Claim 10 **characterized in that** the protective sheet(1B) is formed of polycarbonate resin whereas the adhesive layer(1C) of the protective sheet is formed of acrylic adhesive.

12. A roll member(X) formed by winding the four layered adhesive sheet member(1) used for manufacturing the optical disc (D) into a cylinder in a mandrel form which is employed when the optical disc is manufactured **characterized in that** said four layered adhesive sheet member(1) comprises an elongated release paper, a protective sheet adapted to longitudinally, temporarily adhere to the elongated release paper(1A) at regular intervals, an adhesive layer formed on the protective sheet, and a release paper adapted to temporarily adhere to the an adhesive layer, and **in that** an opening is bored through the four layered adhesive sheet.

13. The roll member as described in Claim 12 **characterized in that** the four layered adhesive sheet member(1) is wound around a mandrel cylinder( 6) with a mandrel hole( 61) through non-adhesive attached sheet(1E).
